# EUROPÄISCHE PATENTSCHRIFT

(11) **EP 2 758 264 B1**
(45) Veröffentlichungstag und Bekanntmachung des Hinweises auf die Patenterteilung: **21.02.2018**
(21) Anmeldenummer: 12755799.9
(22) Anmeldetag: 30.08.2012
(51) Int. Cl.: B60K 11/08, B60K 11/02, B60K 11/04, B60K 11/06, B60R 13/08

(54) **VERSTELLBARE VERKLEIDUNG FÜR EINEN KRAFTWAGEN**
DISPLACEABLE COVERING FOR A MOTOR VEHICLE
REVÊTEMENT RÉGLABLE POUR VÉHICULE AUTOMOBILE

(30) Priorität: 21.09.2011 DE 102011113907
(43) Veröffentlichungstag der Anmeldung: 30.07.2014
(73) Patentinhaber: Daimler AG, 70327 Stuttgart (DE)
(72) Erfinder: BARTL, Jürgen, 73630 Remshalden-Grunbach (DE)
(74) Vertreter: JENSEN & SON
(86) Internationale Anmeldenummer: PCT/EP2012/003635
(87) Internationale Veröffentlichungsnummer: WO 2013/041181

(56) Entgegenhaltungen:
- EP-A1- 0 031 131
- EP-A1- 1 473 449
- DE-A1- 2 422 390
- DE-A1- 3 150 152
- DE-A1-102006 001 797
- DE-A1-102009 025 206
- JP-A- H0 764 564
- JP-A- 2002 120 571
- US-A- 4 924 826

## Beschreibung

Die Erfindung betrifft eine Verkleidung für einen Kraftwagen nach dem Oberbegriff des Patentanspruchs 1. Des Weiteren betrifft die Erfindung eine Verkleidung für ein Fahrerhaus eines Lastkraftwagens nach dem Oberbegriff des Patentanspruchs 2. Die DE 10050219A1 offenbart eine Vorrichtung zur Luftkühlung von temperaturbelasteten Aggregaten, insbesondere eines Brennkraftmotors und eines Getriebes. Die Vorrichtung umfasst einen verstellbaren Lufteinlass und eine absenkbare Vollkapsel, wobei die Vollkapsel einer Verkleidung für einen Kraftwagen entspricht. Für eine verbesserte Kühlung der temperaturbelasteten Aggregate kann die Vollkapsel in ihrem hinteren Bereich abgesenkt werden, so dass ein Lufteinlass freigegeben und eine Luftströmung nach außen erzeugt wird.

Allerdings wird durch die Absenkung der Vollkapsel in ihrem hinteren Bereich lediglich eine nach hinten offene rampenartige Öffnung erzeugt, so dass der abgesenkte hintere Teil der Vollkapsel sowohl für eine Luftströmung als auch für eine Wärmeabstrahlung der temperaturbelasteten Aggregate ein Hindernis in Richtung der Fahrzeughochrichtung darstellt. Dies wirkt sich folglich nachteilig auf die Wärmeableitung von den temperaturbelasteten Aggregaten aus.

Eine Verkleidung gemäß dem Oberbegriff des Patentanspruchs 1 ist aus der US 4 924 826 A bekannt, und eine Verkleidung gemäß dem Oberbegriff des Patentanspruchs 2 ist aus der JP 2002 120571 bekannt.

Es ist die Aufgabe der vorliegenden Erfindung, eine Verkleidung bereitzustellen, mit der eine verbesserte Wärmeabführung von temperaturbelasteten Aggregaten ermöglicht wird.

Diese Aufgabe wird durch eine Verkleidung für einen Kraftwagen mit den Merkmalen des Patentanspruchs 1 und durch eine Verkleidung für ein Fahrerhaus eines Lastkraftwagens mit den Merkmalen des Patentanspruchs 2 gelöst. Vorteilhafte Ausgestaltungen mit zweckmäßigen und nicht-trivialen Weiterbildungen der Erfindung sind in den abhängigen Ansprüchen angegeben. Bei der erfindungsgemäßen Verkleidung für einen Kraftwagen, insbesondere einen Lastkraftwagen, mittels welcher ein Motorraum des Kraftwagens nach unten hin zumindest bereichsweise verkleidet ist und welche wenigstens ein Verkleidungselement aufweist, welches aus einer Abdeckstellung in wenigstens eine weitere Stellung verstellbar ist, wird in der wenigstens einen weiteren Stellung des Verstellelements eine lichte Öffnung bezogen auf eine Fahrzeughochrichtung des Kraftwagens freigegeben. Während also beim Gegenstand gemäß der DE 100 50 219 A1 das Verkleidungselement nach dem Verstellen aus der Verkleidungsstellung nach wie vor vollständig eine Abdeckung in Fahrzeughochrichtung nach unten hin bereit stellt, ist es demgegenüber erfindungsgemäß vorgesehen, dass nach dem Verstellen des Verkleidungselements in Fahrzeughochrichtung nach unten hin eine freie Öffnung geschaffen ist, welche nicht durch das Verkleidungselement abgedeckt ist.

Somit ist ein verbesserter Wärmeabtransport vom Motor geschaffen, da sowohl der aufgeheizte Kühlluftstrom als auch die vom Motor ausgehende Wärmestrahlung ungehindert nach unten abgeführt werden können, so dass je nach Stellung des verstellbaren Verkleidungselements eine effektive akustische Kapselung des Motors bei einer aerodynamisch günstigen Verkleidung des Kraftwagenunterbodens oder wahlweise eine effektive Wärmeabfuhr vom Motor gegeben ist.

Erfindungsgemäß umfasst das Verkleidungselement einen Rollo, insbesondere einen Rollladen. Dadurch weist das Verkleidungselement eine flexible Struktur auf und kann platzsparend zusammengerollt werden, wenn das Verkleidungselement die lichte Öffnung ganz oder teilweise freigibt.

Weiterhin ist gemäß Patentanspruch 2 eine Verkleidung für ein Fahrerhaus eines Lastkraftwagens vorgesehen, mittels welchem ein Motorraum des Kraftwagens im Bereich einer Rückwand des Fahrerhauses nach hinten hin zumindest bereichsweise verkleidet ist und welche wenigstens ein Verkleidungselement aufweist, welches aus einer Abdeckstellung in wenigstens eine weitere Stellung verstellbar ist. Dadurch wird bei Lastkraftwagen die Möglichkeit geschaffen, zusätzlich zu einer eventuellen Abführung der Motorwärme durch Öffnungen in der Unterbodenverkleidung, die Motorwärme an der Rückseite der Fahrerkabine in Form von erhitzter Kühlluft und Wärmestrahlung abzuführen. Aufgrund der Umströmungsverhältnisse von Lastkraftwagen herrscht üblicherweise an der Rückwand des Fahrerhauses ein Unterdruck, der die Abführung der erhitzen Kühlluft noch zusätzlich unterstützt. Es ist somit ein zusätzlich verbesserter Wärmeabtransport vom Motor eines Kraftwagens, insbesondere eines Lastkraftwagens, geschaffen, der bei Bedarf durch Verstellung des wenigstens einen Verkleidungselements aus der Abdeckstellung in eine weitere Stellung erzielt werden kann. Aufgrund der Verstellbarkeit des mindestens einen Verkleidungselements kann darüber hinaus auch eine akustische Kapselung des Motors ermöglicht werden.

In einer weiteren vorteilhaften Ausführungsform sind Bauelemente der Verkleidung integraler Bestandteil von im Kraftwagen vorhandenen Geräuschkapselungs- oder Aerodynamikvorrichtungen. Dadurch ist es möglich, die Bauelemente der Verkleidung platzsparend in bereits am Kraftwagen vorhandenen Baugruppen unterzubringen, beispielsweise wenn das Verstellelement der Verkleidung eine lichte Öffnung freigibt.

Eine weitere vorteilhafte Ausführungsform der Erfindung sieht vor, dass das wenigstens eine Verkleidungselement in Abhängigkeit von mittels einer Sensorik erfassbaren Betriebsparametern verstellbar ist. Mit Hilfe der Sensorik werden thermische und aerodynamische Betriebsbedingungen sowie die Geschwindigkeit des Kraftwagens erfasst, um basierend auf diesen Parametern die Stellung des Verkleidungselements zu regeln. Z.B. ist im Autobahnbetrieb bei Teillast eine möglichst optimale Aerodynamik besonders erstrebenswert, im Stadtbetrieb, bei niedrigeren Geschwindigkeiten und ebenfalls Teillast stehen hingegen möglichst geringe Geräuschemissionen im Vordergrund. Es wird somit sichergestellt, dass je nach Fahrbedingungen automatisch ein möglichst guter Kompromiss zwischen den aerodynamischen, akustischen und thermodynamischen Anforderungen während des Betriebs des Kraftwagens erzielt wird, indem über die mittels der Sensorik erfassbaren Betriebsparameter eine selbstständige Regelung der verstellbaren Verkleidung erfolgt.

Des Weiteren ist es vorteilhaft, wenn die verstellbare Verkleidung in der Abdeckstellung unerwünschte Geräuschemissionen, beispielsweise Motorengeräusche effektiv vermindert bzw. dämmt. Daher sieht die Erfindung schließlich in einer weiteren vorteilhaften Ausführungsform vor, dass das Material des wenigstens einen Verkleidungselements akustisch absorbierend ist.

Die Steuerung kann zusätzlich Parameter aus einem GPS- und TMC-Signal verarbeiten und somit vorausschauend Fahrsituationen (Bergfahrt u. Stau) erkennen und die Aerodynamik bzw. den Luftstrom zur Kühlung der Aggregate und des Kühlsystems optimieren. Die Topographie der vor dem Fahrzeug liegenden Strecke kann berücksichtigt werden.

Ein frontseitig vor dem Kühler angeordneter Rollladen beeinflusst in geschlossenem Zustand Aerodynamik und Außengeräusch positiv. Bedarfsabhängig kann das System geöffnet werden, so dass das Kühlsystem nur im Bedarfsfall mit Kühlluft beliefert wird. Im Regelfall ist im Fernverkehr - insbesondere auf langen Autobahnfahrten - ein Betrieb im geöffneten Zustand nicht erforderlich. Nur bei wenigen Fahrsituationen ist eine vollständige Öffnung des Kühlers notwendig.

Weitere Vorteile, Merkmale und Einzelheiten der Erfindung ergeben sich aus der nachfolgenden Beschreibung eines bevorzugten Ausführungsbeispiels sowie anhand der Zeichnung.

Die Zeichnung zeigt in:

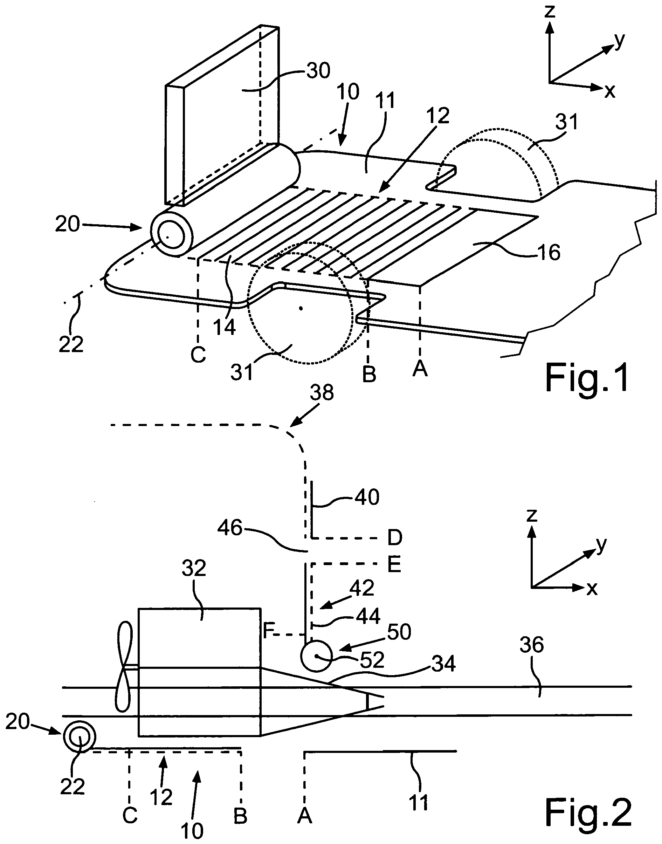

- Fig. 1: eine schematische Perspektivansicht auf eine Unterbodenverkleidung eines Lastkraftwagens mit einem verstellbaren Verkleidungselement in Form eines Rollladens, welcher aus einer Abdeckstellung in eine hier gezeigte, eine lichte Öffnung bezogen auf eine Fahrzeughochrichtung des Lastkraftwagens freigebende weitere Stellung bewegt worden ist; und
- Fig. 2: eine seitliche Schnittdarstellung der in Fig. 1 gezeigten Unterbodenverkleidung des Lastkraftwagens entlang einer Mittellängsschnittebene, wobei außerdem eine Verkleidung dargestellt ist, mittels welcher ein Motorraum des Kraftwagens im Bereich einer Rückwand eines Fahrerhauses nach hinten hin zumindest bereichsweise verkleidet ist und welche vorliegend als Verkleidungselement ebenfalls einen Rollladen aufweist, welches aus einer Abdeckstellung in wenigstens eine weitere Stellung verstellbar ist.

Fig. 1 zeigt eine an der Unterseite eines Lastkraftwagens angebrachte Verkleidung 10, welche üblicherweise als einen Motorraum des Fahrzeugs nach unten hin zumindest bereichsweise verkleidende Unterbodenverkleidung bezeichnet wird und ein feststehendes Verkleidungsteil 11 sowie ein vorliegend als Rollladen 20 ausgebildetes, bewegliches Verkleidungselement 12 umfasst.

Das vorliegend als Rollladen bzw. als eine Art Rollo oder dergleichen wickelbares oder faltbares Element ausgebildete Verkleidungselement 12 weist eine Mehrzahl von Lamellenelementen 14 auf, wobei diese zumindest teilweise aus einem akustisch absorbierenden Material, beispielsweise aus einem Kunststoff, ausgebildet sein können. Das Verkleidungselement 12 bzw. der Rollladen ist translatorisch in Richtung der Fahrzeuglängsachse (x-Achse) beweglich geführt an dem feststehenden, vorliegend als rechteckförmiges Rahmenelement ausgebildeten Verkleidungsteil 11 gelagert und in einer teilweise geöffneten Stellung B dargestellt, wobei das Verkleidungselement 12 im vorliegenden Fall in Richtung der Fahrzeugquerachse (y-Achse) mittig zwischen den schematisch dargestellten Vorderrädern 31 des Lastkraftwagens angeordnet ist. Außerdem ist ein an der Vorderseite des Lastkraftwagens angeordneter Kühler 30 zu erkennen, unterhalb welchem das zum Teil um eine Rollladenachse 22 aufgewickelte Verkleidungselement 12 angeordnet ist.

Für eine möglichst effektive Reduzierung von Geräuschemissionen, beispielsweise durch den Motor, kann das Verkleidungselement 12 in eine Abdeckstellung A verfahren werden, so dass der Motorraum des Lastkraftwagens im Bereich der Verkleidung 10 zur Unterseite hin abgeschottet ist, wodurch die Lärmemissionen von Seiten des Motors erheblich reduziert werden. Die in der Abdeckstellung A in Richtung der Fahrzeughochachse (z-Achse) nach unten hin dicht ausgeführte Verkleidung 10 wirkt sich ebenfalls positiv auf die aerodynamischen Eigenschaften des Lastkraftwagens aus und ermöglicht eine Reduzierung des Kraftstoffverbrauchs und den damit verbundenen Schadstoffemissionen, wie zum Beispiel dem CO₂-Ausstoß.

Steht hingegen eine möglichst effektive Wärmeabfuhr aus dem Motorraum des Lastkraftwagens im Vordergrund, so kann das Verkleidungselement 12 in Richtung der Fahrzeuglängsachse (x-Achse) bis in eine vollständig geöffnete Stellung C verfahren werden, so dass ein Großteil der Verkleidung 10 unterhalb des Motorraums des Lastkraftwagens eine lichte Öffnung aufweist und erhitzte Kühlluft sowie von temperaturbelasteten Aggregaten im Motorraum ausgehende Wärmestrahlung aus dem Motorraum effektiv in Richtung der Fahrzeughochachse (z-Achse) nach unten abgeführt werden können. Dabei kann das Verkleidungselement 12 beim Verfahren von der Abdeckstellung A bis hin in die vollständig geöffnete Stellung C unterhalb des Kühlers 30 Platz sparend um die Rollladenachse 22 in Form eines Rollladens 20 aufgerollt werden.

Alternativ ist auch eine Ausführungsform denkbar, bei der die Lamellenelemente 14 des Verkleidungselements 12 schwenkbar um ihre jeweilige in Richtung der Fahrzeugquerachse (y-Achse) verlaufende Achse ausgeführt sind, so dass einzelne oder alle Lamellenelemente 14 von einer den Unterboden des Lastkraftwagens abschottende bis in eine den Unterboden des Lastkraftwagens in eine jeweils eine lichte Öffnung in Richtung der Fahrzeughochachse (z-Achse) nach unten freigebende Position geschwenkt werden und zusätzlich die schwenkbaren Lamellenelemente 14 des Verkleidungselements 12 ebenfalls innerhalb der Verkleidung 10 translatorisch in Richtung der Fahrzeuglängsachse (x-Achse) beweglich an dem feststehenden Verkleidungsteil 11 geführt sind, so dass ein Abschotten bzw. Freigeben der Verkleidung im Bereich unterhalb des Motorraums des Lastkraftwagens sowohl durch ein Verschwenken der einzelnen Lamellenelemente 14 als auch durch eine translatorische Bewegung des Verkleidungselements 12 in Kombination mit einem Ab- bzw. Aufrollen des Verkleidungselements 12 um die Rollladenachse 22 erfolgen kann.

In Fig. 2 ist der Lastkraftwagen aus Fig. 1 entlang einer Mittellängsschnittebene in einer seitlichen Schnittdarstellung gezeigt. Es ist deutlich ersichtlich, dass die in Fig. 1 gezeigte Verkleidung 10, die das Verkleidungsteil 11 und das Verkleidungselement 12 umfasst, und um die Rollladenachse 22 in Form eines Rollladens 20 auf- und abwickelbar von einer Abdeckstellung A über die teilweise geöffnete Stellung B bis hin in die vollständig geöffnete Stellung C beweglich ausgeführt ist, ebenfalls in Fig. 2 gezeigt ist. Folglich sind diese Elemente auch mit den gleichen Bezugszeichen wie in Fig. 1 bezeichnet.

Dabei ist in Fig. 2 ein an einem Rahmenlängsträger 36 des Lastkraftwagens an einer nicht näher dargestellten Motorlagerung gelagerter Motor 32 und ein schematisch dargestelltes Getriebe 34 zu erkennen, wobei die das Verkleidungsteil 11 und das Verkleidungselement 12 umfassende Verkleidung 10 in Richtung der Fahrzeughochachse (z-Achse) unterhalb von dem Motor 32 und dem Getriebe 34 angeordnet ist. In Fig. 2 ist das Verkleidungselement 12 ebenfalls in einer teilweise geöffneten Stellung B dargestellt, wobei das Verkleidungselement 12 dabei teilweise um die Rollladenachse 22 in Form eines Rollladens 20 aufgerollt ist.

Neben dem an der Unterseite des Lastkraftwagens angeordneten Verkleidungselement 12 ist ein weiteres zweites Verkleidungselement 42 im Bereich der Rückwand 40 des Fahrerhauses 38 des Lastkraftwagens zu erkennen, mittels welchem der Motorraum des Lastkraftwagens im Bereich einer Rückwand 40 eines Fahrerhauses 38 nach hinten hin zumindest bereichsweise verkleidet ist. In einer nicht zur Erfindung gehörenden Ausführungsform ist das zweite - einzelne Lamellenelemente 44 umfassende - Verkleidungselement 42 innerhalb der Rückwand 40 des Fahrerhauses 38 in Richtung der Fahrzeughochachse (z-Achse) translatorisch beweglich gelagert und in einer teilweise geöffneten Stellung E dargestellt, so dass in Richtung der Fahrzeuglängsachse (x-Achse) eine lichte Öffnung 46 im Bereich der Rückwand durch das zweite Verkleidungselement 42 freigegeben ist und das Verkleidungselement 42 zum Teil um eine im unteren Bereich der Rückwand 40 angeordnete Rollladenachse 52 in Form eines Rollladens 50 aufgewickelt ist.

Das zweite Verkleidungselement 42 ist ähnlich dem ersten Verkleidungselement 12 in Abhängigkeit von den Fahrbedingungen von einer das Motorgeräusch dämmenden, aerodynamisch günstigen Abdeckstellung D über eine teilweise geöffnete Stellung E in eine vollständig geöffnete, die Motorwärme möglichst gut abführende Stellung F bewegbar, wobei in der teilweise oder vollständig geöffneten Stellung E bzw. F aufgrund der bei Lastkraftwagen üblicherweise im Fahrbetrieb gegebenen Umströmungsverhältnisse an der Rückwand 40 des Fahrerhauses 38 ein den Wärmeabtransport zusätzlich unterstützender Unterdruck herrscht. Dabei kann das zweite Verkleidungselement 42 beim Verfahren von der Abdeckstellung D bis hin in die vollständig geöffnete Stellung F ebenfalls in Form eines zweiten Rollladens 50 platzsparend um die Rollladenachse 52 aufgerollt werden. In einer erfindungsgemäßen Ausführungsform sind die Lamellenelemente 44 des Verkleidungselements 42 schwenkbar um ihre jeweilige in Richtung der Fahrzeugquerachse (y-Achse) verlaufende Achse gelagert, so dass einzelne oder alle Lamellenelemente 44 von einer die Rückwand 40 im Bereich des Motorraums des Lastkraftwagens abschottende bis in eine die Rückwand 40 des Lastkraftwagens in eine jeweils eine lichte Öffnung in Richtung der Fahrzeuglängsachse (x-Achse) nach hinten freigebende Position geschwenkt werden können. Zusätzlich sind die schwenkbaren Lamellenelemente 44 des Verkleidungselements 42 ebenfalls innerhalb der Rückwand 40 translatorisch in Richtung der Fahrzeughochachse (z-Achse) beweglich an der Rückwand 40 geführt, so dass ein Abschotten bzw. Freigeben der Verkleidung im Bereich des Motorraums des Lastkraftwagens sowohl durch ein Verschwenken der einzelnen Lamellenelemente 44 als auch durch eine translatorische Bewegung des Verkleidungselements 42 in Kombination mit einem Ab- bzw. Aufrollen des Verkleidungselements 42 um die Rollladenachse 52 erfolgen kann.

Das erste Verkleidungselement 12 und das zweite Verkleidungselement 42 können je nach Fahrbedingungen einzeln oder beide geschlossen, teilweise oder vollständig geöffnet sein, um einerseits eine möglichst gute akustische Kapselung von vom Motorraum ausgehenden Geräuschemissionen zu ermöglichen oder andererseits eine möglichst gute Wärmeabfuhr von erhitzen Aggregaten, wie beispielsweise dem Motor, zu realisieren. Sind beide Verkleidungselemente 12, 42 geöffnet, kann eine besonders gute Wärmeabfuhr erzielt werden, da zum einen zwei lichte Öffnungen zum Abtransport von Wärme bereitgestellt werden und zum anderen eine Art zusätzlicher Durchzug durch den Motorraum aufgrund der beiden geöffneten Verkleidungselemente 12, 42 ermöglicht wird, der für eine Wärmeabfuhr günstige Strömungsverhältnisse schafft.

Weiterhin kann das zweite Verkleidungselement 42 auch alleinig, also ohne das Vorhandensein des in Fig. 1 bzw. Fig. 2 gezeigten ersten Verkleidungselements 12 im Unterbodenbereich des Lastkraftwagens, an der Rückwand 40 des Fahrerhauses 38 angeordnet sein. Die Unterstützung zur anforderungsgerechten Erzielung der akustischen, aerodynamischen und thermodynamischen Anforderungen im Betrieb des Lastkraftwagens erfolgt in diesem Fall alleine durch die entsprechende Verstellung des zweiten Verkleidungselements 42.

## Patentansprüche

1. Verkleidung (10) für einen Kraftwagen, insbesondere einen Lastkraftwagen, mittels welcher ein Motorraum des Kraftwagens mit einem Motor (32) und einem Getriebe (34) nach unten hin zumindest bereichsweise verkleidet ist und welche wenigstens ein Verkleidungselement (12) aufweist, welches aus einer Abdeckstellung (A) in wenigstens eine weitere Stellung (B, C) verstellbar ist, wobei in der wenigstens einen weiteren Stellung (C, B) des Verkleidungselements (12) eine lichte Öffnung (16) bezogen auf eine Fahrzeughochrichtung (z-Achse) des Kraftwagens freigegeben ist und das Verkleidungselement (12) in Richtung der Fahrzeughochachse (z-Achse) unterhalb von dem Motor (32) und dem Getriebe (34) angeordnet ist,
**dadurch gekennzeichnet, dass** das Verkleidungselement (12) einen Rollo, insbesondere einen Rollladen (20), umfasst und das Verkleidungselement (12) in der vollständig geöffneten Stellung (C) unterhalb eines an der Vorderseite des Kraftwagens angeordneten Kühlers (30) aufgerollt ist.

2. Verkleidung für ein Fahrerhaus (38) eines Lastkraftwagens, mittels welcher ein Motorraum des Kraftwagens im Bereich einer Rückwand (40) des Fahrerhauses (38) nach hinten hin zumindest bereichsweise verkleidet ist und welche wenigstens ein Verkleidungselement (42) aufweist, welches aus einer Abdeckstellung (D) in wenigstens eine weitere Stellung (E, F) verstellbar ist,
**dadurch gekennzeichnet, dass** das Verkleidungselement (42) wenigstens ein jeweils um seine eigene Achse drehbares Lamellenelement (44) umfasst und die Lamellenelemente (44) innerhalb der Rückwand (40) translatorisch beweglich geführt sind.

3. Verkleidung (10) nach Anspruch 1 oder 2,
**dadurch gekennzeichnet, dass**
Bauelemente der Verkleidung (10) integraler Bestandteil von am Kraftwagen vorhandenen Geräuschkapselungs- oder Aerodynamikvorrichtungen sind.

4. Verkleidung (10) nach einem der vorhergehenden Ansprüche,
**dadurch gekennzeichnet, dass**
das wenigstens eine Verkleidungselement (12, 42) in Abhängigkeit von mittels einer Sensorik erfassbaren Betriebsparametern verstellbar ist.

5. Verkleidung (10) nach einem der vorhergehenden Ansprüche,
**dadurch gekennzeichnet, dass**
ein Material des wenigstens einen Verkleidungselements (12, 42) akustisch absorbierend ist.

## Claims

1. Covering (10) for a motor vehicle, in particular for a lorry, by means of which at least certain regions of an engine compartment of the motor vehicle, containing an engine (32) and a gearbox (34), is covered towards the bottom and which comprises at least one covering element (12), which can be moved from a covering position (A) into at least one further position (B, C), wherein in the at least one further position (C, B) of the covering element (12) a clear opening (16) is uncovered relative to a vehicle vertical direction (Z-axis) of the motor vehicle and the covering element (12) is placed below the engine (32) and the gearbox (34) in the direction of the vehicle vertical axis (Z-axis),
**characterised in that**
the covering element (12) comprises a blind, in particular a roller blind (20), and **in that** the covering element (12) is rolled up below a radiator (30) located at the front of the motor vehicle in the fully open position (C).

2. Covering for a cab (38) of a lorry, by means of which at least a certain region of an engine compartment of the motor vehicle is covered towards the rear in the region of a rear wall (40) of the cab (38) and which comprises at least one covering element (42), which can be moved from a covering position (D) into at least one further position (E, F),
**characterised in that**
the covering element (42) comprises at least one lamellar element (44) rotatable about its own axis, and **in that** the lamellar elements (44) are guided within the rear wall (40) for translational movement.

3. Covering (10) according to claim 1 or 2,
**characterised in that**
components of the covering (10) are integral parts of engine enclosure or aerodynamic devices.

4. Covering (10) according to any of the preceding claims,
**characterised in that**
the at least one covering element (12, 42) is adjustable as a function of operating parameters which can be detected by means of a sensor system.

5. Covering (10) according to any of the preceding claims,
**characterised in that**
the material of the at least one covering element (12, 42) is sound-absorbing.

## Revendications

1. Revêtement (10) pour un véhicule automobile, en particulier un camion, qui recouvre au moins à certains endroits vers le bas un compartiment moteur du camion conjointement avec un moteur (32) et une transmission (34) et qui présente au moins un élément de revêtement (12), qui peut être déplacé à partir d'une position (A) de recouvrement dans au moins une autre position (B, C), dans l'au moins une autre position (C, B) de l'élément de revêtement (12) se déclenche une ouverture intérieure (16) par rapport à un sens ascendant de véhicule (axe z) du véhicule automobile et l'élément de revêtement (12) étant disposé en direction de l'axe ascendant du véhicule automobile (axe z) en dessous du moteur (32) et de la transmission (34), **caractérisé en ce que** l'élément de revêtement (12) comprend un store, en particulier un volet roulant (20) et l'élément de revêtement (12) est enroulé dans la position complètement ouverte (C) en dessous d'un radiateur (30) disposé sur la face avant du véhicule automobile.

2. Revêtement pour un habitacle (38) d'un camion, qui recouvre un compartiment moteur du véhicule automobile dans la zone d'une paroi arrière (40) de l'habitacle (38) vers l'arrière au moins à certains endroits et qui présente au moins un élément de revêtement (45) qui peut se déplacer à partir d'une position de recouvrement (D) dans au moins une autre position (E, F), **caractérisé en ce que** l'élément de revêtement (42) comprend au moins un élément (44) de lamelle pivotant respectivement autour de son propre axe et les éléments (44) de lamelles sont guidés à l'intérieur de la paroi arrière (40) de manière à se déplacer en translation.

3. Revêtement (10) selon la revendication 1 ou la revendication 2, **caractérisé en ce que** des éléments de construction du revêtement (10) font partie intégrante des dispositifs aérodynamiques ou d'encapsulation du bruit présents sur le véhicule automobile.

4. Revêtement (10) selon l'une quelconque des revendications précédentes, **caractérisé en ce que** l'au moins un élément de revêtement (12, 42) peut se déplacer en fonction des paramètres de fonctionnement détectés par un système de capteur.

5. Revêtement (10) selon l'une quelconque des revendications précédentes, **caractérisé en ce qu'**un matériau de l'au moins un élément de revêtement (12, 42) est absorbant acoustiquement.
